# EUROPÄISCHE PATENTSCHRIFT

(11) **EP 0 453 757 B1**
(45) Veröffentlichungstag und Bekanntmachung des Hinweises auf die Patenterteilung: **23.08.1995**
(21) Anmeldenummer: 91104166.3
(22) Anmeldetag: 18.03.1991
(51) Int. Cl.: H02G 3/18

(54) **Anschlusssystem für Kabelsteckverbindungen**
Assembly system for cable socket
Système d'assemblage de prise pour câble

(30) Priorität: 20.03.1990 DE 9003246 U
(43) Veröffentlichungstag der Anmeldung: 30.10.1991
(73) Patentinhaber: Dietz, Volker, D-85598 Baldham (DE); KABELTECHNIK DIETZ GmbH, D-81549 München (DE)
(72) Erfinder: Dietz, Volker, W-8011 Baldhamm (DE)
(74) Vertreter: Neidl-Stippler, Cornelia, Dr.

(56) Entgegenhaltungen:
- EP-A- 0 355 524
- GB-A- 1 492 961
- US-A- 4 874 334

## Beschreibung

Die Erfindung betrifft ein Anschlußsystem gemäß dem Oberbegriff des Anspruchs 1.

Häufig wechselnde Verbindung von Geräten, die Stecker unterschiedlichster Normen aufweisen, mit in Gebäuden fest installierten Kabelsystemen ist insbesondere in der Datenübertragungstechnik erwünscht. Dabei ist ein Wechsel verschiedener Übertragungssysteme wie auch der Netzwerktechnik häufig. Ein besonderes Problem stellt dabei die Tatsache dar, daß ständig neue Kabelverbindungssysteme entwickelt werden, die meist nicht genormt sind. So haben bspw. die internen Normen der Fa. AMP Incorporated, in Harrisburg, Pennsylvania, U.S.A. zu einem überaus häufig angewandten USA-System geführt, das für sog. FDDI - Netzwerke üblich ist. Dafür ist als Steckersystem das sog. FSD-System (Fixed Shroud Duplex-System) üblich. Es gibt auch das sog. Cheapernet-System, das andere Stecker verwendet. Bei in der Bundesrepublik üblichen Geräten werden wiederum andere Stecker verwendet, die zwar hinsichtlich der Pin-Belegungen gleich sind, jedoch andere Außenmaße aufweisen, so daß die bspw. von AMP erhältlichen Steckdosen für Netzwerke nicht verwendbar sind, da diese Stecker nicht in die Steckdosen passen.

Es ist üblich, für die häufig wechselnde Steckverbindung von festverlegten Kabelsträngen in Gebäuden - bspw. in Art einer Ringleitung od. einer Netzwerkleitung, an die häufig neue Computer oder auch Peripheriegeräte, wie Drucker, Spezialbildschirme od. Zeichengeräte oder auch Zentraleinheiten angeschlossen werden, feste Anschlußsteckdosen vorzusehen, die das Verbinden des festverlegten Kabelstranges mit Außengeräten, die Stecker zur Verbindung aufweisen, erleichtern.

Zu diesem Zweck sind Anschlußsteckdosen vorgesehen, die an Kabelkanälen oder Wänden durch Anschrauben od. andere Befestigungsmittel befestigt werden. In diesen Anschlußsteckdosen befinden sich die Anschlußkomponenten des Kabelnetzes.

Bedauerlicherweise passen häufig die Stecker der verwendeten Peripheriegeräte nicht zu den verwendeten Anschlußsteckdosen, so daß es bei Einsatz von neuen Computersystemen häufig notwendig war, die Steckdosen oder Stecker auszutauschen und es nur mit größten Schwierigkeiten geläng, eine Steckverbindung zwischen dem festverlegten Netz und dem Peripheriegerät herzustellen.

Es ist bereits bekannt, Adaptereinheiten zur Anpassung verschiedener Stecksysteme aneinander vorzusehen - die bekannten Adaptereinheiten waren jedoch insofern nachteilig, da sie aufwendig gehandhabt werden mußten und einen unverhältnismäßig hohen Aufwand bei ihrer Anbringung an den bereits verlegten Montagedosen eines Systems erforderten.

Es ist bereits ein gattungsgemäßes Anschlußsystem bekannt, insbesondere zur Verbindung von Kabeln für elektrischen Strom oder auch Lichtwellenleitern mittels Stekkern, mit einer Montagedose mit in Dosen-außenrichtung vorgespannten, aus dem Dosengrundkörper herausgeformten Wandteilen, die als Federelemente an gegenüberliegenden Seiten zur einfachen Befestigung der Montagedose gegen Zug in einer Kanalwand od. dgl. dienen, wobei die Federelemente jeweils Rasterhöhungen auf ihrer Außenwand aufweisen und ein aus einem Tragring und einer Abdeckung bestehender Adapter vorgesehen ist. Der Tragring ist dabei eine Rahmenkonstruktion, deren innere Öffnung so ausgewählt ist, daß die Montagedose in den Rahmen unter Paßsitz einsteckbar ist, während eine Rahmeninnenwand in Richtung der Montagedose derart in etwa rechtwinklig zur Rahmenebene verläuft, die eine nur geringfügig größere Höhe als die Entfernung der Rastnuten der Federelemente von Ende der Federelemente besitzt. Die Federelemente der Montagedose spreizen sich beim Einsetzen der Dose in den Rahmen nach außen und die Aussparungen in der Rahmenwand dienen als Anschläge der Dosenfederelemente am Rahmen und wirken gegen Herausziehen der Dose aus dem Rahmen. Eine Abdeckung ist mit auf zwei gegenüberliegenden Seiten ausgebildeten Befestigungsvorsprüngen ausgerüstet, die jeweils ein Fenster aufweisen, das entsprechend der Größe mindestens einer Einrastnut so ausgebildet ist, daß der Abdeckrahmen mit den Befestigungsvorsprüngen in Richtung der Montagedose unter Eindrücken zweier gegenüberliegender Federelmente der Montagedose und Einrasten der Federelementvorsprünge in das jeweilige Fenster des Befestigungsvorsprungs aufsetzbar ist, (vgl. Katalog 89-835 Streamlined 5-89 der Fa. AMP Incorporated in Harrisburg, Pennsylvania USA).

Das bekannte Adaptersystem ist insofern günstig, als durch die Klemmverbindungen ein sicherer Sitz gewährleistet ist. Die Klemmverbindungen sind jedoch nach Einbau des Adaptersystems nur noch mit erheblichem Arbeitsaufwand, der häufig auch die Beschädigung von Abdeckung und/oder Tragring bewirkt, lösbar, sodaß eine mehrmalige Handhabung unmöglich erscheint.

Es ist demgegenüber Aufgabe der Erfindung, ein gattungsgemäßes Anschlußsystem zu schaffen, das auch die Verbindung von Steckern unterschiedlicher Norm ermöglicht aber die Handhabung und auch den Austausch/Umbau des Adaptersystems ermöglicht bzw. vereinfacht.

Die Aufgabe wird erfindungsgemäß gelöst durch ein Anschlußsystem gemäß dem Anspruch 1.

Dadurch, daß die Befestigung der Adapterteile an der Montagedose durch von außen zugängliche Schrauben erfolgt, kann die aufwendige Schnappverbindung, die eine besondere Ausgestaltung der Montagedoseninnenwand voraussetzt, vermieden werden und es können einfachere und leichter zu handhabende Abdeckteile, die keine bruch- und verbiegungsgefährdeten (bei metallischen Teilen) Fortsätze besitzen, die sich im wesentlichen senkrecht zur Adapterteilebene erstrecken, eingesetzt werden.

Dadurch, daß Schrauben jederzeit von außen zugänglich und mit üblichen Hilfsmitteln, also Schraubendrehern, gelöst und wiederbefestigt werden können, ist die Handhabung des erfindungsgemäßen Adaptersystems, insbesondere beim Auswechseln desselben, erheblich vereinfacht.

Bei vorteilhaften Ausgestaltungen der Erfindung ist vorgesehen, daß der Tragring aus einem widerstandsfähigen, schlagfesten Material, wie verstärkten Kunststoffen oder Metall, besteht, während der Abdeckrahmen, der in direktem Kontakt mit dem Stecker steht, bevorzugt aus einem isolierenden Material, wie Kunststoff, besteht.

Durch die erfindungsgemäße Konstruktion wird die Handhabung von derartigen Paßteilen erheblich vereinfacht.

Die Stecköffnung der Abdeckrahmenkonstruktion kann je nach anzuschließendem System gestaltet sein - bspw. entsprechend einem AMP-Stecker mit einer Führung - wesentlich ist aber die erfindungsgemäß erheblich vereinfachte Handhabung durch die Verwendung einer Schraubverbindung im Gegensatz zu bekannten Klemmverbindungen, die nach dem Einrasten praktisch kaum mehr zu lösen sind.

Nachfolgend soll die Erfindung anhand der Zeichnung näher erläutert werden. Dabei zeigt die einzige Figur ein erfindungsgemäßes Adaptersystem für den Anschluß eines DIN-Steckers an ein FDDI-Netz

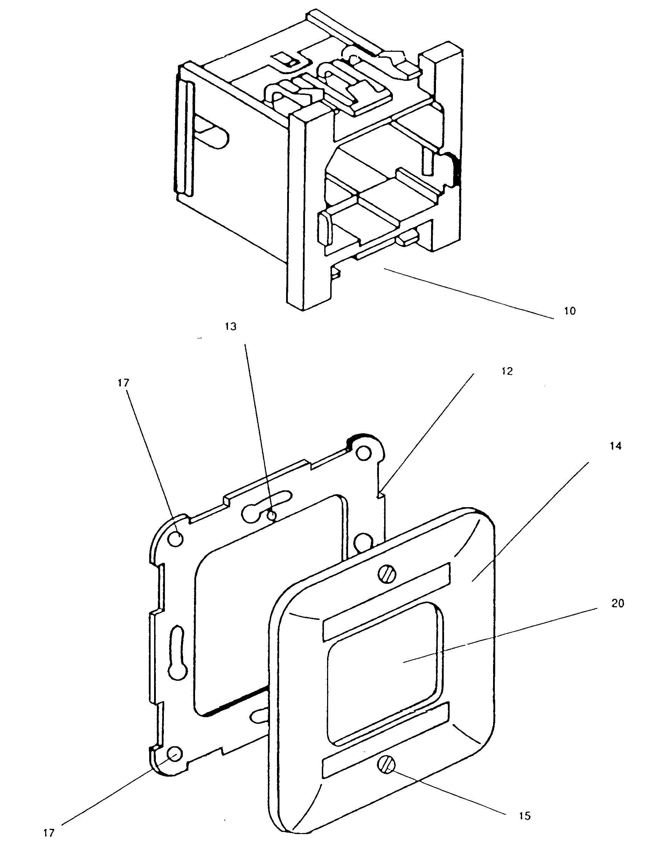

Wie in Fig. 1 gezeigt, kann die an sich bekannte Montagedose 10 in die Öffnung eines flachen, hier im wesentlichen rechtwinkligen Metallrings als Tragring 12 eingesteckt werden und der Tragring 12 sodann in üblicher Weise über die hier in den Ringecken gezeigten Befestigungsbohrungen 17 mittels Schrauben am Untergrund, bspw. der Wand eines Kabelkanals, befestigt werden. Auf den Tragring 12 wird sodann der aus Kunststoff bestehende Abdeckrahmen 14 aufgeschraubt, der als Führung für einen Stecker dient und gleichzeitig die Anordnung nach außen abschließt. Abdeckrahmen 14 und Tragring 12 können, je nach Bedarf, unterschiedliche, dem Fachmann geläufige Größen und Formen haben, so bspw., um einen in Deutschland gebräuchlichen Stecker mit einem FDDI- oder auch mit einem Cheapernet-Netz zu verbinden.

Ein erfindungsgemäßer Tragring 12 - hier für eine Befestigungsspur von 60 mm ausgebildet - weist eine Mittelöffnung auf sowie Bohrungen 13, zur Befestigung der Abdeckung und Bohrungen 17 zur Befestigung am Untergrund.

Nach Einsatz der Montagedose 10 in den Tragring 12 und Befestigung desselben durch Anschrauben durch die Befestigungsöffnungen 17 an einer Kabelkanalwand wird die Abdeckung 14 so auf den Tragring 12 gelegt, daß die Befestigungsbohrungen des Tragrings 12 mit den Bohrungen 15 der Abdeckung 14 fluchten und sodann Befestigungsschrauben eingedreht. Der Austausch oder Abbau des Adapters erfolgt entsprechend.

## Patentansprüche

1. Anschlußsystem für Steckverbindungen, insbesondere zum Verbinden von Kabeln, auch Lichtwellenleitern, mit:
- einer Montagedose (10);
- einem einen Tragring (12) und eine eine mittlere Öffnung für einen Stecker aufweisenden Abdeckung (14) umfassenden Adapter;
- wobei der Tragring (12) eine Befestigungsbohrungen (17) aufweisende Rahmenkonstruktion zur Befestigung an einem Untergrund, wie einem Kabelkanal, ist, in deren Öffnung die Montagedose (10) unter Paßsitz einsteckbar ist;
dadurch gekennzeichnet, daß
- der Tragring (12) und die Abdeckung (14) bei Aufeinanderlegen fluchtende Bohrungen (13) aufweisen, in die von außen zugängliche Schrauben (15) eindrehbar sind, durch die die Adapterteile (12, 14) aneinander und an der Montagedose (10) befestigbar sind;
- der Tragring (12) ein im wesentlichen flaches Teil mit einer Mittelöffnung für den Stecker ist; und
- die Abdeckung (14) eine im wesentlichen ebene Rahmenkontaktfläche aufweist.

2. Anschlußsystem nach Anspruch 1, dadurch gekennzeichnet, daß die Abdeckung (14) ein Kunststoffteil ist.

3. Anschlußsystem nach Anspruch 1 oder 2, dadurch gekennzeichnet, daß der Tragring (12) aus Metall oder einem glasfaserverstärkten Kunststoff ist.

## Claims

1. Connection system for plug-in connections, more especially for the connection of cables, also light-wave conductors, having:
- an assembly box (10);
- an adapter, which includes a supporting ring (12) and a cover (14) provided with a central aperture for a plug;
- the supporting ring (12) being a frame-like construction provided with securing bores (17) for securement on a base, such as a cable duct, the assembly box (10) being insertable in the aperture of said frame-like construction with a snug fit;
characterised in that
- the supporting ring (12) and the cover (14) have bores (13), which are in alignment with one another when placed one upon the other, screws (15) being rotatably inserted in said bores, which screws are accessible from externally, and through which screws the adapter members (12, 14) are securable on one another and on the assembly box (10);
- the supporting ring (12) is a substantially flat component part having a central aperture for the plug; and
- the cover (14) has a substantially flat face for contact with the frame.

2. Connection system according to claim 1, characterised in that the cover (14) is a plastics material component part.

3. Connection system according to claim 1 or 2, characterised in that the supporting ring (12) is formed from metal or from a plastics material which is reinforced with glass fibre.

## Revendications

1. Système de connexion pour connecteurs à fiches, en particulier pour le raccordement de câbles ainsi que de guides d'ondes lumineuses, comportant :
- une boîte de montage (10),
- un adaptateur comprenant un anneau porteur (12) et un couvercle (14) présentant une ouverture centrale pour une fiche,
- l'anneau porteur (12) étant une structure d'encadrement présentant des alésages de fixation (17) pour fixer sur une base, telle qu'un canal de câble, dans l'ouverture de laquelle la boîte de montage (10) peut être enfichée par ajustement,
caractérisé en ce que :
- l'anneau porteur (12) et le couvercle (14) présentent des alésages (13) alignés mutuellement, dans lesquels peuvent être vissées des vis (15) accessibles de l'extérieur, par lesquelles les parties (12, 14) de l'adaptateur peuvent être fixées l'une à l'autre et à la boîte de montage (10),
- l'anneau porteur (12) est une pièce sensiblement plate comportant une ouverture centrale pour la fiche, et
- le couvercle (14) présente une surface de contact d'encadrement sensiblement plane.

2. Système de connexion selon la revendication 1, caractérisé en ce que le couvercle (14) est une pièce de matière plastique.

3. Système de connexion selon la revendication 1 ou 2, caractérisé en ce que l'anneau porteur (12) est constitué d'un métal ou d'une matière plastique renforcée par des fibres de verre.
